# EUROPEAN PATENT SPECIFICATION

(11) **EP 0 805 017 B1**
(45) Date of publication and mention of the grant of the patent: **02.10.2002**
(21) Application number: 96107008.3
(22) Date of filing: 03.05.1996
(51) Int. Cl.: B29D 1/00, F16B 33/00

(54) **A method for realizing an archimedes screw spiral**
Verfahren zur Herstellung einer Förderschnecke
Procédé pour la fabrication d'un vis d'Archimèdes

(43) Date of publication of application: 05.11.1997
(73) Proprietor: IDR HOLDING S.A., 2086 Luxembourg (LU)
(72) Inventor: Vincenzi, Lamberto, I-41030 S. Prospero Sulla Secchia (MO) (IT)
(74) Representative: Lanzoni, Luciano

(56) References cited:
- GB-A- 1 354 351
- GB-A- 2 065 817
- GB-A- 2 138 732
- US-A- 3 384 141

## Description

In the field of **Archimedes** screw spiral manufacture, the prior art teaches the lengthwise deformation of a rectangular metal sheet so that it assumes a spiral shape, and thereafter a welding of a longitudinal edge of the resulting spiral to a cylindrical shaft.

Generally the surface layer of the spiral is subsequently treated to improve its mechanical properties.

This process is laborious and expensive; further, it is applicable only with deformable and weldable materials.

**GB-A-2 065 817, which discloses the features of the preamble of claim 1, relates to a screw and screwdriver combination in which the screw is formed of a plastic mouldable material about a rigid core member.**

The main aim of the present invention is to make available a method for realizing a spiral of an **Archimedes** screw which obviates the above-mentioned limits and drawbacks inherent in the prior art.

Some advantages of the invention are represented. by the fact that it can be used to produce **Archimedes screw spirals** in plastic materials, preferable polyeurethane; it permits production of constant-step and variable-step spirals; it provides spirals having good mechanical properties, which are fluent and give a good seal; and it requires the use of simple and economical means for construction.

These aims and advantages and others besides are all attained by the method of the invention, as it is characterized in the claims that follow.

Further characteristics and advantages of the present invention will better emerge from the detailed description that follows, of an embodiment of the invention, illustrated in the form of a non-limiting example in the accompanying drawings, in which:
figure 1 is a partially-sectioned lateral view of a die used in a first embodiment of the method;
figure 2 is a schematic representation of an operative phase of the first embodiment of the method;
figure 3 is a schematic lateral view of a die which can be used in a second embodiment of the invention, with some parts removed better to evidence others;
figure 4 shows an operative phase of a third embodiment of the method.

With reference to the figures of the drawings 1 and 2, 10 denotes in its entirety a die for casting plastic materials, comprising a tubular core 11 which in the example is made in two parts, that is an external part 12 and an internal part 15, both tubular in shape, one being insertable into the other, wherein the internal surface 13 of the external part 12 is coupled with the external surface 14 of the internal part 15.

1 denotes a central cavity afforded in the internal surface 2 of the internal part 15 of the core 11. A through-channel 3 is realized on the walls of the internal part 15, which channel 3 extends spirally coaxially to the core 11. The channel 3 is spiral-shaped with constant step. The central cavity 1 and the channel 3 together give rise to a moulding cavity 4 of the die 10.

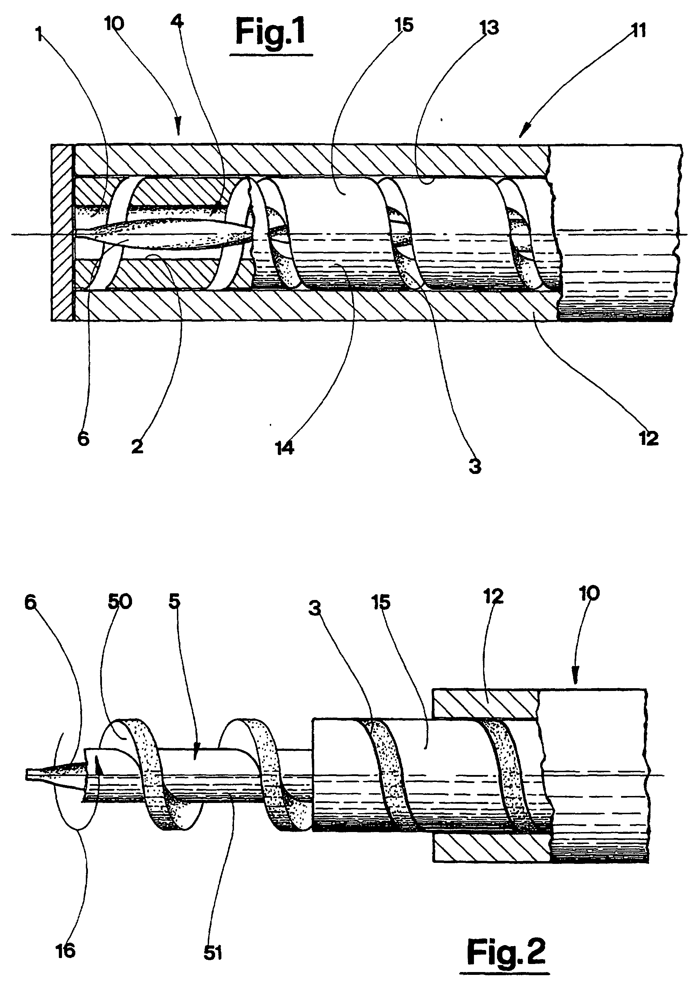

6 denotes a metal stalk 6, coaxial to the core 11 and preferably constituted by a flat twisted bar presenting a helical surface. The stalk 6 is arranged centrally of the central cavity 1 such that it presents its helical surface twisting in an opposite direction to that of the spiral of the channel 3. Further provided are means, of known type and not illustrated, for keeping the stalk 6 in position with respect to the core 11, immobilizing the stalk 6 in the position of figure 1, where it is distant from the internal surface 2 describing the central cavity 1.

In figure 2, 5 denotes an **Archimedes** screw made using the method.

The **Archimedes** screw 5 comprises a central support shaft 51 made of plastic, and a spiral surface 50 made in a single piece with the central support shaft 51, which spiral surface 50 winds about the central support shaft 51. The **Archimedes** screw 5 further comprises, enclosed in the material forming the central support shaft 51, the stalk 6, constituted by a flat twisted plate presenting a spiral surface with screw direction opposite to that of the spiral surface 50.

In figure 2, 16 denotes the unscrewing direction of the **Archimedes** screw 5 by means of which said screw 5 is removed from the die 10.

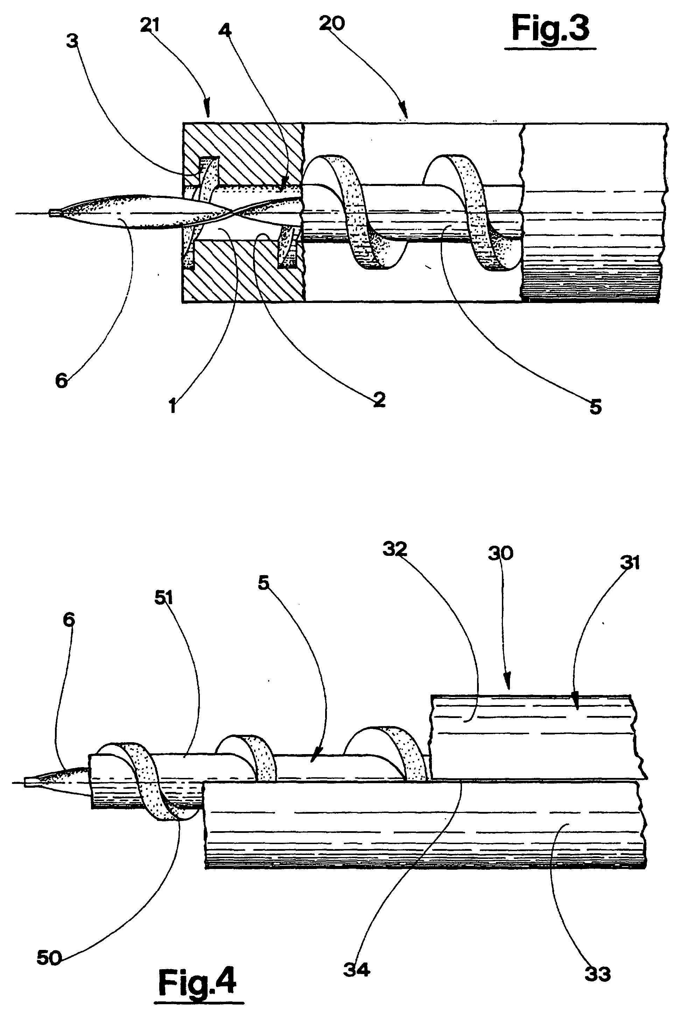

With reference to figure 3, 20 denotes a die, suitable for casting plastic materials, which comprises a tubular core 21 provided with an internal surface 2 describing a central cavity 1.

The die of figure 3 differs from that of figures 1 and 2 in that the core 21 is made in a single piece and the spiral channel 3 is made blind on the internal surface 2 of the core 21. Apart from this, the elements relative to the die 20 are practically the same as those relating to the die 10.

With reference to figure 4, 30 denotes a die for casting plastic materials, comprising a tubular core 31, which internal surface (not shown in figure 4) describes an internal cavity. This internal surface exhibits a helical channel, not illustrated, shaped and arranged as those of the previous embodiments.

Differently to the previous embodiments, however, the core 31 of figure 4 is made in two pieces 32 and 33, coupled and separable along a median and longitudinal separation plane 34 by means of a reciprocal distancing movement. Also, the cast piece is constituted by a variable-step **Archimedes** screw 5.

According to the invention, a method for realizing the spirals of Archimedes screws comprises the phases of:
i) preparing one of the above-described dies 10, 20 or 30;
ii) inserting the stalk 6 in the central cavity 1 of the relative core 11, 21, 31, and stablilizing same in a predetermined position;
iii) filling the moulding cavity 4 with a molten plastic material, preferably polyeurethane, in order to obtain, after solidification, a piece in which the stalk 6 is embedded;
iv) extracting the screw from the moulding cavity 4.

The stalk 6 is anchored to the relative die so that it will not be displaced by effect of the hydrostatic thrust of the molten plastic during the casting of phase iii) above.

In the examples of figures 2 and 3, where the helical step of the **Archimedes** screw (corresponding to the channel 3 step) is constant, the extraction of the cast screw is achieved by a reciprocal helical displacing between the screw and the die 1, 20; in other words, the screw is unscrewed in the direction indicated by arrow 16.

In the embodiment of figure 4, where the channel 3 step is variable, the extraction of the cast screw is achieved by reciprocal distancing of the two parts 32, 33 of the die 30 in a normal direction to the separation plane 34.

The presence of the stalk 6 guarantees a degree of rigidity of the **Archimedes** screw 5. Further, the special conformation and arrangement of the stalk 6, with the spiral of the metal plate winding in opposite direction to that of the spiral surface 50 of the helix, further improves the mechanical properties thereof, which also prevents the stalk 6 from disengaging from the body of the spiral.

## Claims

1. A method for realizing a screw spiral, comprising the following phases:
preparation of a die (10, 20) suitable for casting plastic materials, which die (10, 20) comprises a tubular core (11, 21) exhibiting a central cavity (1) and having an internal surface (2) describing said central cavity (1) and exhibiting a channel (3) extending spirally and coaxially to said core (11, 21),
said channel (3) exhibiting a constant-step spiral shape,
wherein said central cavity (1) and said channel (3) in combination give rise to a moulding cavity (4) of said die (10, 20);
insertion in said central cavity (1) of said core (11, 21) of a metal stalk (6) held in a coaxial position to said core (11, 21);
filling of said moulding cavity (4) with a molten plastic material in order to obtain after solidification thereof a screw spiral (5) containing embedded in a centre thereof said stalk (6);
extraction of said screw spiral (5) from said moulding cavity (4);
**characterized in that:**
the screw spiral (5) is the spiral of an Archimedes screw;
said phase of extraction of said screw spiral (5) is achieved by performing a reciprocal unscrewing of said screw spiral (5) and said die (10, 20).

2. A method for realizing a screw spiral, comprising the following phases:
preparation of a die (30) suitable for casting plastic materials, which die (30) comprises a tubular core (31) exhibiting a central cavity (1) and having an internal surface (2) describing said central cavity (1) and exhibiting a channel (3) extending spirally and coaxially to said core (31), wherein said central cavity (1) and said channel (3) in combination give rise to a moulding cavity (4) of said die (30);
insertion in acid central cavity (1) of said core (31) of a metal stalk (6) held in a coaxial position to said core (31);
filling of said moulding cavity (4) with a molten plastic material in order to obtain after solidification thereof a screw spiral (5) containing embedded in a centre thereof said stalk (6);
extraction of said screw spiral (5) from said moulding cavity (4);
**characterized in that:**
the screw spiral (5) is the spiral of an Archimedes screw;
the channel (3) step is variable;
said die (30) is made in two parts (32, 33), reciprocally coupled and separable at a median and longitudinal separation plane (34), and **in that** said phase of extraction of said screw spiral (5) is achieved by reciprocally distancing said two parts (32, 33) of said die (30).

3. A method for realizing a screw spiral, in particular as in claim 1, comprising the following phases:
preparation of a die (10) suitable for casting plastic materials, which die (10) comprises a tubular core (11) exhibiting a central cavity (1) and having an internal surface (2) describing said central cavity (1) and exhibiting a channel (3) extending spirally and coaxially to said core (11), wherein said central cavity (1) and said channel (3) in combination give rise to a moulding cavity (4) of said die (10);
insertion in said central cavity (1) of said core (11) of a metal stalk (6) held in a coaxial position to said core (11);
filling of said moulding cavity (4) with a molten plastic material in order to obtain after solidification thereof a screw spiral (5) containing embedded in a centre thereof said stalk (6);
extraction of said screw spiral (5) from said moulding cavity (4);
**characterized in that:**
the screw spiral (5) is the spiral of an Archimedes screw;
constituted by an external part (12) and an internal part (15), both said external part (12) and said internal part (15) being tubular; said internal part (15) being insertable into said external part (12); said channel (3) being realized throughout on walls of said internal part (15).

4. A spiral of a screw, comprising: a central support shaft (51), made of a plastic material; a spiral surface (50), made in a single piece with said central support shaft (51), which winds coaxially about said central support shaft (51); a stalk (6), embedded in a centre of said plastic material forming said central support shaft (51);
**characterized in that** the screw spiral (5) is the spiral of an Archimedes screw and the stalk (6) presents a helical surface.

5. A spiral as in claim 4, **characterized in that** the helical surface of the stalk (6) winds in a direction which is opposite to a winding direction of said spiral surface (50).

6. A spiral as in claim 4 or 5, **characterized in that** said stalk (6) comprises a flat plate twisted about itself in such a way as to obtain a spiral shape thereof.

## Patentansprüche

1. Verfahren zur Herstellung einer Förderschnecke, enthaltend die folgenden Phasen:
- Vorbereitung einer Form (10, 20), geeignet zum Giessen von Kunststoffmaterialien, welche Form (10, 20) einen rohrförmigen Kern (11, 21) enthält, der einen mittleren Hohlraum (1) aufweist, und der eine den genannten mittleren Hohlraum (1) beschreibende interne Oberfläche (2) hat, die einen Kanal (3) aufweist, der sich schneckenförmig und koaxial zu dem genannten Kern (11, 21) erstreckt, wobei der genannte Kanal (3) eine Schneckenform mit gleichbleibender Steigung aufweist, und bei welcher der genannte mittlere Hohlraum (1) und der genannte Kanal (3) zusammen eine Giessmulde (4) der genannten Form (10, 20) bilden;
- Einsetzen in den genannten mittleren Hohlraum (1) des genannten Kerns (11, 21) eines metallenen Schaftes (6), der in einer koaxialen Position zu dem genannten Kern (11, 21) gehalten wird;
- Füllen der genannten Giessmulde (4) mit einem geschmolzenen Kunststoffmaterial, um nach dem Erhärten desselben eine Förderschnecke (5) zu erhalten, die in ihrer Mitte eingeschlossen den genannten Schaft (6) enthält;
- Abziehen der genannten Förderschnecke (5) aus der genannten Giessmulde (4);
**dadurch gekennzeichnet, dass**:
- die Förderschnecke (5) die Spirale einer Archimedischen Schraube ist; wobei die genannte Abzugsphase der genannten Förderschnecke (5) erhalten ist, indem ein gegenseitiges Abschrauben der genannten Förderschnecke (5) und der genannten Form (10, 20) vorgenommen wird.

2. Verfahren zur Herstellung einer Förderschnecke, enthaltend die folgenden Phasen:
- Vorbereitung einer Form (30), geeignet zum Giessen von Kunststoffmaterialien, welche Form (30) einen rohrförmigen Kern (31) enthält, der einen mittleren Hohlraum (1) aufweist, und der eine den genannten mittleren Hohlraum (1) beschreibende interne Oberfläche (2) hat, die einen Kanal (3) aufweist, der sich schneckenförmig und koaxial zu dem genannten Kern (31) erstreckt, und bei welcher der genannte mittlere Hohlraum (1) und der genannte Kanal (3) zusammen eine Giessmulde (4) der genannten Form (30) bilden;
- Einsetzen in den genannten mittleren Hohlraum (1) des genannten Kerns (31) eines metallenen Schaftes (6), der in einer koaxialen Position zu dem genannten Kern (31) gehalten wird;
- Füllen der genannten Giessmulde (4) mit einem geschmolzenen Kunststoffmaterial, um nach dem Erhärten desselben eine Förderschnecke (5) zu erhalten, die in ihrer Mitte eingeschlossen den genannten Schaft (6) enthält;
- Abziehen der genannten Förderschnecke (5) aus der genannten Giessmulde (4);
**dadurch gekennzeichnet, dass**:
- die Förderschnecke (5) die Spirale einer Archimedischen Schraube ist;
- der Schritt des Kanals (3) veränderbar ist;
- die genannte Form (30) aus zwei Teilen (32, 33) hergestellt ist, die miteinander verbunden und an einer mittleren und längs verlaufenden Trennebene (34) trennbar sind, und dadurch, dass die genannte Abzugsphase der genannten Förderschnecke (5) durch das gegenseitige Entfernen der genannten beiden Teile (32, 33) der genannten Form (30) voneinander erhalten ist.

3. Verfahren zur Herstellung einer Förderschnecke, insbesondere nach Patentanspruch 1, enthaltend die folgenden Phasen:
- Vorbereitung einer Form (10), geeignet zum Giessen von Kunststoffmaterialien, welche Form (10) einen rohrförmigen Kern (11) enthält, der einen mittleren Hohlraum (1) aufweist, und der eine den genannten mittleren Hohlraum (1) beschreibende interne Oberfläche (2) hat, die einen Kanal (3) aufweist, der sich schneckenförmig und koaxial zu dem genannten Kern (11) erstreckt, und bei welcher der genannte mittlere Hohlraum (1) und der genannte Kanal (3) zusammen eine Giessmulde (4) der genannten Form (10) bilden;
- Einsetzen in den genannten mittleren Hohlraum (1) des genannten Kerns (11) eines metallenen Schaftes (6), der in einer koaxialen Position zu dem genannten Kern (11) gehalten wird;
- Füllen der genannten Giessmulde (4) mit einem geschmolzenen Kunststoffinaterial, um nach dem Erhärten desselben eine Förderschnecke (5) zu erhalten, die in ihrer Mitte eingeschlossen den genannten Schaft (6) enthält;
- Abziehen der genannten Förderschnecke (5) aus der genannten Giessmulde (4);
**dadurch gekennzeichnet, dass**:
- die Förderschnecke (5) die Spirale einer Archimedischen Schraube ist;
- der genannte Kern (11) aus zwei Teilen hergestellt ist, gebildet aus einem äusseren Teil (12) und einem inneren Teil (15), wobei der genannte äussere Teil (12) und der genannte innere Teil (15) beide rohrförmig sind; wobei der genannte innere Teil (15) in den genannten äusseren Teil (12) einsetzbar ist; und wobei der genannte Kanal (3) durchgehend an den Wänden des genannten inneren Teils (15) hergestellt ist.

4. Eine Schneckenspirale, enthaltend: eine aus Kunststoffmaterial hergestellte mittlere Trägerwelle (51); eine in einem Stück mit der genannten mittleren Trägerwelle (51) hergestellte spiralförmige Oberfläche (50), welche sich koaxial um die genannte mittlere Trägerwelle (51) windet; einen Schaft (6), der in der Mitte des die genannte mittlere Trägerwelle (51) formenden genannten Kunststoffinaterials eingebettet ist;
**dadurch gekennzeichnet, dass** die genannte Förderschnecke (5) die Spirale einer Archimedischen Schraube ist und der Schaft (6) eine schneckenförmige Oberfläche aufweist.

5. Spirale nach Patentanspruch 4, **dadurch gekennzeichnet, dass** die schneckenförmige Oberfläche des Schaftes (6) sich in einer Richtung windet, die entgegengesetzt zu der Richtung verläuft, in welcher sich die genannte spiralförmige Oberfläche (50) windet.

6. Spirale nach Patentanspruch 4 oder 5, **dadurch gekennzeichnet, dass** der genannte Schaft (6) eine flache Leiste enthält, die auf solche Weise um sich selbst gedreht ist, dass eine Spiralform derselben erhalten ist.

## Revendications

1. Un procédé pour la fabrication d'une vis d'Archimède, comprenant les phases suivantes:
- préparation d'un moule (10, 20) apte au moulage de matières plastiques, lequel moule (10, 20) comprend un noyau tubulaire (11, 21) présentant une cavité centrale (1) et ayant une surface interne (2) délimitant ladite cavité centrale (1) et présentant un canal (3) se développant en spirale coaxialement audit noyau (11, 21), ledit canal (3) présentant une forme en spirale à pas constant, moule dans lequel ladite cavité centrale (1) et ledit canal (3) en combinaison forment une cavité de moulage (4) dudit moule (10, 20);
- insertion dans ladite cavité centrale (1) dudit noyau (11, 21) d'un élément d'armature métallique (6) maintenu dans une position coaxiale audit noyau (11, 21);
- remplissage de ladite cavité de moulage (4) avec un matériau plastique fondu de manière à obtenir, après solidification, une vis (5) contenant en son centre ledit élément d'armature (6);
- extraction de ladite vis (5) de ladite cavité de moulage (4);
**caractérisé en ce que**:
- la vis (5) est la spirale d'une vis d'Archimède;
- ladite phase d'extraction de ladite vis (5) est réalisée en opérant un dévissage réciproque de ladite vis (5) et dudit moule (10, 20).

2. Un procédé pour la fabrication d'une vis d'Archimède, comprenant les phases suivantes:
- préparation d'un moule (30) apte au moulage de matières plastiques, lequel moule (30) comprend un noyau tubulaire (31) présentant une cavité centrale (1) et ayant une surface interne (2) délimitant ladite cavité centrale (1) et présentant un canal (3) se développant en spirale coaxialement audit noyau (31), dans lequel ladite cavité centrale (1) et ledit canal (3) en combinaison forment une cavité de moulage (4) dudit moule (30);
- insertion dans ladite cavité centrale (1) dudit noyau (31) d'un élément d'armature métallique (6) maintenu dans une position coaxiale audit noyau (31);
- remplissage de ladite cavité de moulage (4) avec un matériau plastique fondu de manière à obtenir, après solidification, une vis (5) contenant en son centre ledit élément d'armature (6);
- extraction de ladite vis (5) de ladite cavité de moulage (4);
**caractérisé en ce que**:
- la vis (5) est la spirale d'une vis d'Archimède;
- le pas du canal (3) est variable;
- ledit moule (30) est réalisé en deux parties (32, 33), réciproquement accouplées et séparables en un plan médian et longitudinal de séparation (34), et ladite phase d'extraction de ladite vis (5) est réalisée par éloignement réciproque des deux parties (32, 33) dudit moule (30).

3. Un procédé pour la fabrication d'une vis d'Archimède, en particulier selon la revendication 1, comprenant les phases suivantes:
- préparation d'un moule (10) apte au moulage de matières plastiques, lequel moule (10) comprend un noyau tubulaire (11) présentant une cavité centrale (1) et ayant une surface interne (2) délimitant ladite cavité centrale (1) et présentant un canal (3) se développant en spirale coaxialement audit noyau (11), dans lequel ladite cavité centrale (1) et ledit canal (3) en combinaison forment une cavité de moulage (4) dudit moule (10);
- insertion dans ladite cavité centrale (1) dudit noyau (11) d'un élément d'armature métallique (6) maintenu dans une position coaxiale audit noyau (11);
- remplissage de ladite cavité de moulage (4) avec un matériau plastique fondu de manière à obtenir, après solidification, une vis (5) contenant en son centre ledit élément d'armature (6);
- extraction de ladite vis (5) de ladite cavité de moulage (4);
**caractérisé en ce que**:
- la vis (5) est la spirale d'une vis d'Archimède;
- ledit noyau (11) est réalisé en deux parties constituées par une partie externe (12) et une partie interne (15), toutes deux tubulaires; ladite partie interne (15) étant insérable dans ladite partie externe (12); ledit canal (3) étant réalisé passant au travers des parois de ladite partie interne (15).

4. La spirale d'une vis, comprenant: un arbre central de support (51), réalisé en matière plastique; une superficie en spirale (50), réalisée en une seule pièce avec ledit arbre central de support (51) autour duquel elle s'enroule coaxialement; un élément d'armature (6), englobé au centre dudit matériau plastique formant ledit arbre central de support (51);
**caractérisée en ce que** la vis (5) est la spirale d'une vis d'Archimède et l'élément d'armature (6) présente une superficie hélicoïdale.

5. Une spirale selon la revendication 4, **caractérisée en ce que** la surface hélicoïdale de l'élément d'armature (6) se développe dans une direction opposée à la direction d'enroulement de ladite surface en spirale (50).

6. Une spirale selon la revendication 4 ou 5, **caractérisée en ce que** ledit élément d'armature (6) comprend une plaque plate tordue sur elle-même de manière à obtenir une forme en spirale.
